Europäisches Patentamt

European Patent Office

Office européen des brevets

(11) Publication number: **0 212 343**
**B1**

# EUROPEAN PATENT SPECIFICATION

(45) Date of publication of patent specification: **04.10.89**

(51) Int. Cl.⁴: **F 16 J 1/10, F 01 B 9/02**

(21) Application number: **86110313.3**

(22) Date of filing: **25.07.86**

(54) **Variable volume apparatus.**

(30) Priority: **19.08.85 US 767140**

(43) Date of publication of application:
**04.03.87 Bulletin 87/10**

(45) Publication of the grant of the patent:
**04.10.89 Bulletin 89/40**

(84) Designated Contracting States:
**DE FR GB IT SE**

(56) References cited:
**DE-C- 334 850**
**GB-A- 529 885**

**PATENT ABSTRACTS OF JAPAN, VOL. 9, NO. 3
(M-349)1726r, 9TH JANUARY 1985 & JP-A-59
153 951 (TOYOTA JIDOSHA K.K.) 01-09-1984**

(73) Proprietor: **Morgado, Ralph Gordon**
**33080 Lake Mead Drive**
**Fremont California 94536 (US)**

(72) Inventor: **Morgado, Ralph Gordon**
**33080 Lake Mead Drive**
**Fremont California 94536 (US)**

(74) Representative: **Liesegang, Roland, Dr.-Ing.**
**FORRESTER & BOEHMERT Widenmayerstrasse**
**4 Postfach 22 01 37**
**D-8000 München 22 (DE)**

Courier Press, Leamington Spa, England.

**Description**

The invention relates to a variable volume apparatus as described in the preamble of claim 1 (JP—A—59 153951).

In an internal combustion engine of the type which uses reciprocating pistons, a major disadvantage of the standard piston is its weight. The reciprocating motion causes the piston to change direction often and suddenly and this places very large loads on the connecting rod, bearings and cylinder walls. The inertial forces on the connecting rod and the energy expended to accelerate and decelerate the piston throughout its cycle would be directly reduced by reducing the weight of the piston.

In addition, the connecting rod is subjected to the widest range of reciprocating stresses including the compressive loads from the expanding gases and inertial forces from the piston changing directions. These stresses change many times per second. Some of these stresses are directly proportional to the weight of the piston and rod and the rate of change of the velocity. By decreasing the weight of the connecting rod and piston, the force required to change direction is directly decreased. Also, conventional connecting rods are short since they are connected to a lower part of the piston below the piston rings. This creates side forces on the cylinder walls as the connecting rod tilts substantially during the reciprocating motion of the piston in the cylinder.

Another major disadvantage of the standard piston is the need for piston rings to seal the space between the pistons and the cylinder walls. These rings have inherent problems in their design and function, including movement of the rings in their grooves as the piston changes directions. This causes the rings momentarily to lose their seal and lose some of the force that drives the piston down the cylinder.

Also, piston rings have gaps which are necessary to mount them on the piston and to maintain tension against the cylinder walls for sealing. Pressure caused by the expanding gases above the piston forces gases through these gaps, reducing engine efficiency and increasing emission of pollutants.

And, the machining of a piston to accept rings, the manufacturing of the rings and the labor necessary to install or replace them increases the cost of a conventional internal combustion engine.

A standard piston is attached to the connecting rod by a wrist pin which adds considerable weight to the assembly and requires wrist pin bosses on the piston. These bosses also add significant weight that contributes additional stress on the connecting rod.

The standard piston transfers a substantial amount of its heat to the cylinder walls through its piston rings and the lubricating oil. Very little is conveyed to the cylinder walls by the piston skirt. A standard piston skirt is usually made non-circular (out of round) through expensive machining to accommodate uneven expansion due to the need to have more material near the wrist pin bosses and less material away from the bosses.

Also, the drag produced as the piston rings slide on the cylinder walls causes frictional heating and loss of power. Other piston designs have been disclosed, but these have severe limitations associated with modifications to the cylinder walls, the crank pin, ball and socket joint, seals, complex machining and assembly requirements, and the like (see for example, U.S. Patents 1,467,066, 2,023,466, 2,284,645, 2,710,137, 2,985,358, 3,078,033, 3,082,935, 3,523,001, 3,695,150, 3,716,310 and French Patent 1,133,388).

It is an object of the present invention to provide a piston that is lighter, self sealing, more easily replaceable, less expensive and capable of delivering more power for the same stroke and bore than conventional pistons.

This object is accomplished by the features of claim 1.

The piston of the present invention avoids the disadvantages of conventional pistons. In particular, the piston of the invention is self-sealing without the use of conventional piston rings. The piston of the invention can be made shorter and be housed in a shorter cylinder bore. Therefore, the engine can be made smaller, less expensive and lighter.

Fig. 1 is a side view of a conventional engine showing the piston in midstroke with the engine housing being sectioned;

Fig. 2 is a partial, quarter sectional side view of a piston and connecting rod according to the invention;

Fig. 3 is a partial perspective view of the piston and rod of Figure 2 disassembled;

Fig. 4 is a half-sectioned side view of the assembled piston and rod of the present invention;

Fig. 5 is a detailed half-sectioned side view of the piston of the present invention;

Fig. 6 is a detailed isometric top view of the piston of the present invention;

Fig. 7 is an isometric underside view of the piston showing a heat transfer mechanism according to the present invention;

Fig. 8 is an isometric view of the piston according to the present invention showing a mechanism for allowing piston flexibility;

Fig. 9 is an isometric view of the piston according to the present invention showing a reinforcing bead around its base; and,

Figs. 10, 11, 12 and 13 are four successive side views of the piston of the present invention as it moves in a cylinder.

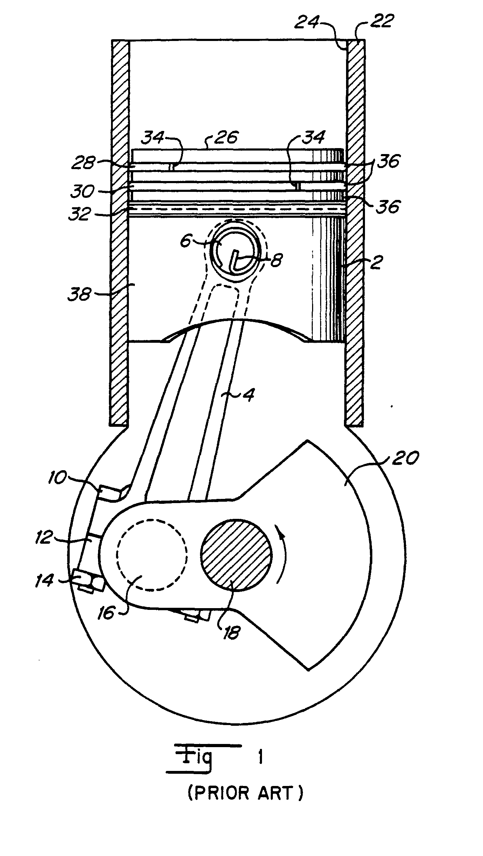

Referring first to the conventional piston and connecting rod shown in Fig. 1, there is illustrated a cylindrical main body 2, attached to a connecting rod 4 via a wrist pin 6 which is secured from sliding out of the piston 2 with a spring clip 8. The lower end of connecting rod 4 is attached to crank pin 16 on crank shaft 18 via a removable clamping piece 12. Clamping piece 12 is held around crank pin 16 and to connecting rod 4 with bolts 10 and nuts 14. A balance counterweight 20 is mounted on crank shaft 18 and opposite crank pin 16.

Piston 2 slides vertically in cylinder 22. The top side 26 of piston 2 is solid and is shown flat. The upper portion of piston 2 has three piston rings 28, 30, 32 placed in grooves 36 machined in piston 2. These rings 28, 30, 32 have gaps 34. The lower portion of piston 2 consists of a piston skirt 38. It is thick in the area near the wrist pin 6 and thin elsewhere around its circumference.

Piston 2 is relatively heavy which causes great forces to be placed on connecting rod 42, bearings and cylinder wall 22. Its design necessitates the use of piston rings 28, 30, 32, which allow gas blowby and subsequent power loss, and necessitates the use of wrist pin 6 which adds considerable weight and expense to piston 2. Piston 2 must also have skirt 38 to maintain piston 2 vertically in the cylinder 22, and this adds to the weight of piston 2. Skirt 38 also adds length to piston 2, necessitating an area in the engine below cylinder 22 to accommodate it. Piston 2 is able to vibrate considerably in cylinder 22 as it cycles, due to the piston rings 28, 30, 32 moving in their grooves 36 and piston 2 pushing alternately against one side of cylinder 22 on its downstroke and then the other side on its upstroke. This piston design dissipates heat poorly because it is relatively massive and thus is not easily cooled by lubricating oil splashing up from below, and because the piston rings, which have little contact area with cylinder 22 and piston 2, are the only continuously contacting heat conduction pathway from piston 2 to cylinder 22.

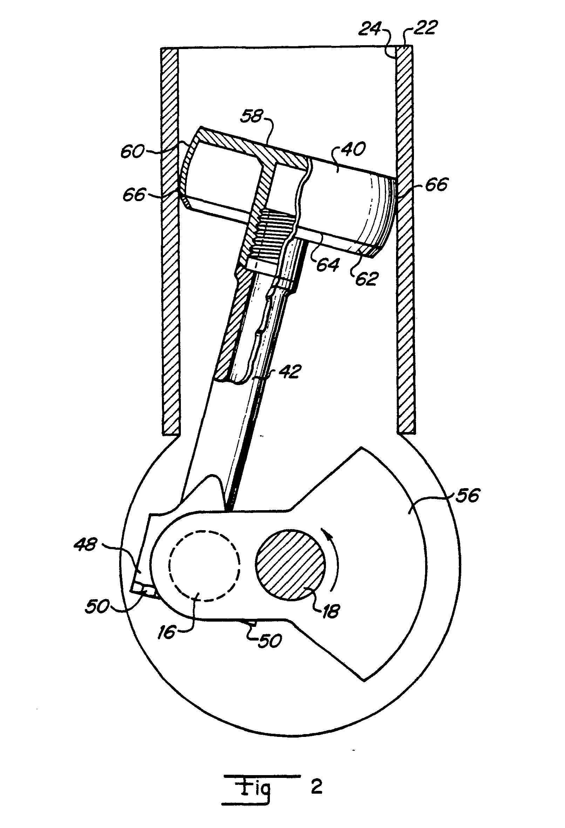

Referring now to the preferred embodiment of Fig. 2, there is shown a piston 40 and a connecting rod assembly 42 according to the present invention. Piston 40 is disposed to reciprocate inside a circularly cross-sectioned cylinder 22 as in a standard internal combustion engine. An outer wall 60 of the piston 40 rides in contact with inner wall 24 of cylinder 22, and the connecting rod 42, which is rigidly attached to the piston 40 is also attached to a crank pin 16 on a rotatable crank shaft 18 via a separable clamping piece 48 which is fastened to rod 42 to hold it to crank pin 16 via bolts 50. Piston 40 and connecting rod 42 are counterweighted by a machined area 56 on crankshaft 18.

The outer side wall 60 of the piston 40 has the contour of a sectioned sphere as detailed in Fig. 5. The diameter of this sphere equals the inside diameter of cylinder 22, and the upper or top wall 58 may be flat as shown in Fig. 2. The lower edge of the sidewall 60 has a short skirt 62 which is angled inward towards the center. This angled skirt 62 is shown in Fig. 2 at such an angle that a definite "break line" 64 is visible in the spherical contour of outer side wall 60. This skirt 62 may also be formed by merely decreasing the radius of the contoured outer wall 60 of the piston, and in that case, no "break line" would be apparent.

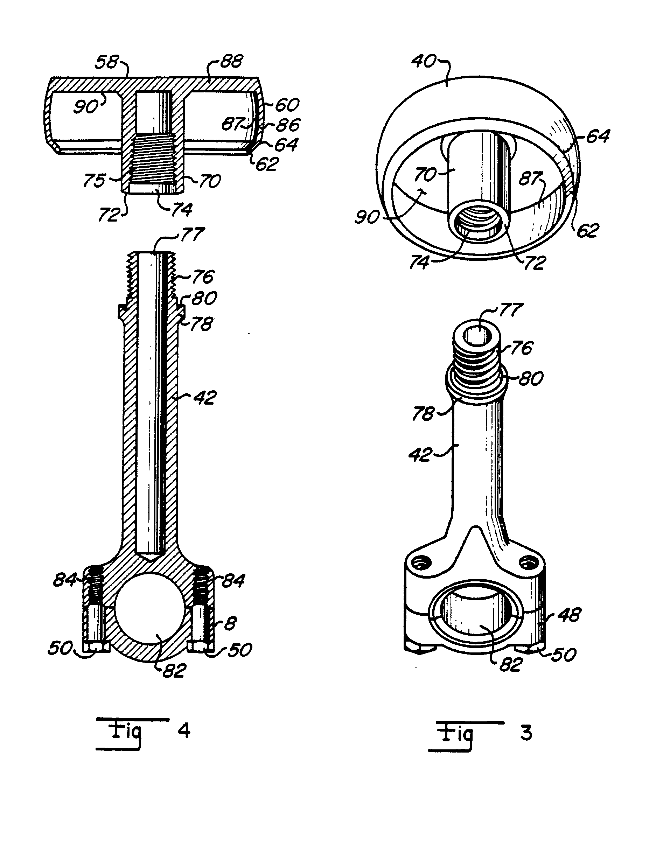

Fig. 3 is a perspective view of the invention. Piston 40 is shown disassembled from connect-

ing rod 42. Piston 40 and connecting rod 42 are attached by means of a male threaded portion 76 on the top of connecting rod 42 which mates with a female threaded portion 75 in hollowed area 74 of piston stem 70. The lower edge of piston stem 70 has a bevelled shoulder 72. Connecting rod 42 has a shoulder 78 below its male threaded portion 76. The upper surface 80 of shoulder 78 is angled downward towards the center of connecting rod 42. The angled shoulder 72 mates with the upper surface 80 of the connecting rod shoulder to lock piston 40 to connecting rod 42 when they are screwed together. The center of the connecting rod can be hollowed out 77 to reduce the weight of connecting rod 42. Connecting rod 42 has a circular opening 82 at its lower end for attachment in conventional manner to the crank pin of a standard crankshaft.

Fig. 4 shows a diametrically sectioned view of disassembled piston 40 and connecting rod 42. The inner side walls 87 of the piston are machined to match the contour of the outer side walls 60 and angled skirt 62 of the piston and the top wall 88 is shown thicker than the side wall 86 for strength and heat transfer control. The inner top wall 90 follows the contour of the outer top wall 58. Fig. 4 shows the angled shoulder 72 and its mating upper angled surface 80 on the connecting rod. The lower portion of the connecting rod has threaded holes 84 on both sides of the crank pin opening 82 to accept bolts 50 which hold the removable lower piston 48 to the main body of connecting rod 42.

The sectional view of Fig. 5 shows the form of construction in a sectioned side view of piston 40. The outer side walls 60 are spherical in form. The form of the sphere from which piston 40 is fashioned is shown by a dotted line 100. The upper top wall 58 may be flat, as determined by upper sphere truncating line 102 which runs parallel to a diametrical line 106. The lower edge 101 is determined by lower sphere truncating line 104 which runs parallel to line 106. The determining lines 104, 102 need not be equidistant from the diametrical line 106. The stem 70 is positioned on the vertical center line 108 of the sectioned sphere 100 which determines the curvature of the outer side walls 60. The side wall 86 has an inner wall 87 which substantially follows the contour of outer wall 60. Inner wall contour break line 92 substantially matches outer wall contour break line 64.

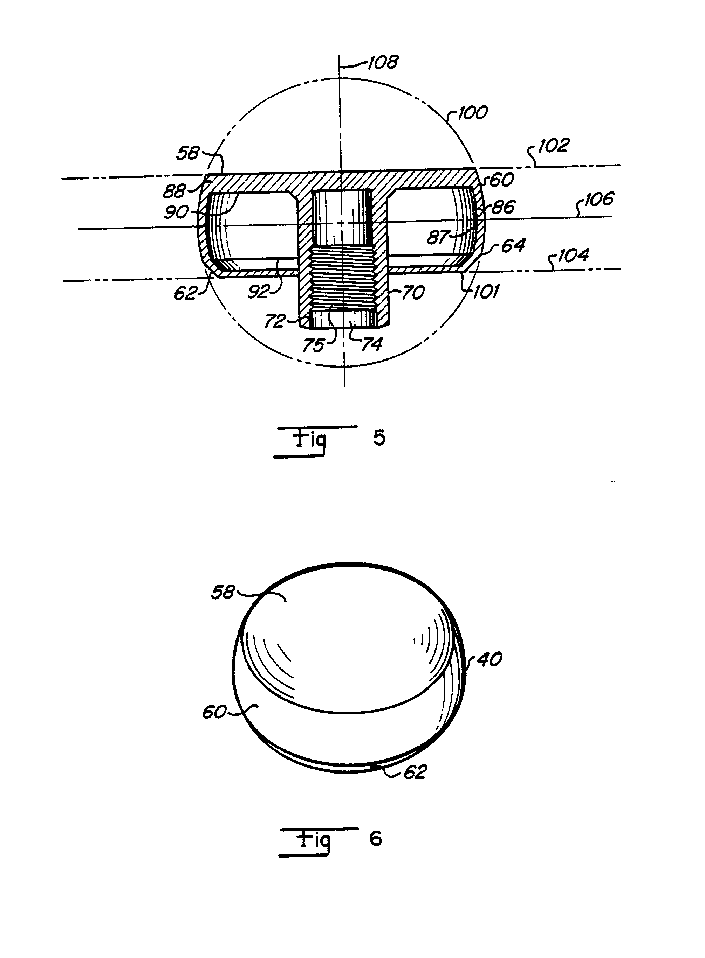

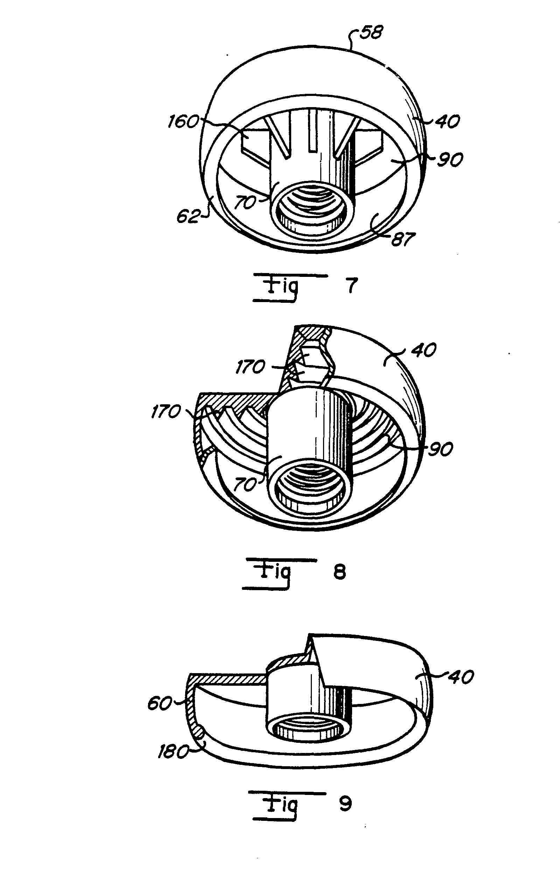

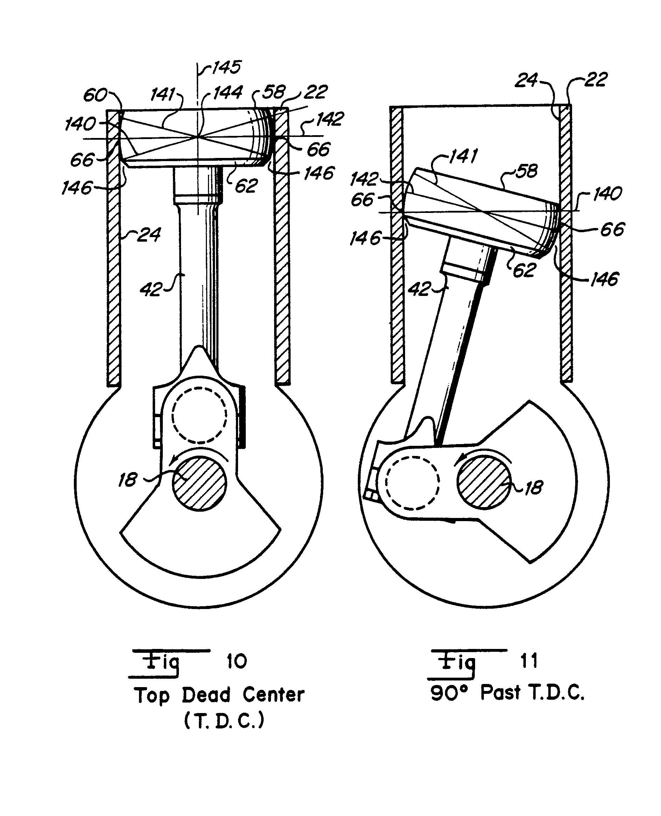

Fig. 6 is an angled view which shows piston top wall 58, piston sidewall 60 and oil directing bevel 62, as viewed from above the piston. Fig. 7 is an angled view of the under side of piston 40. Vertical fins 160 radiate from piston stem 70 out along the underside of the piston top 58 (i.e. the piston ceiling 90) towards inner side wall 87. Fig. 8 is a partial sectioned view of the underside of piston 40 showing concentric fins 170 on piston ceiling 90 positioned concentrically around piston stem 70. Fig. 9 shows piston 40 with an extra thickness of material 180 along the inside bottom edge of piston side wall 60.

In Figs. 10, 11, 12, and 13, the piston 40 and connecting rod 42 are shown in a cylinder 22 in four positions of travel associated with 90 degrees rotational portions of one revolution of crankshaft 18. In Fig. 10, piston 40 is shown with three lines 140, 141, 142 drawn through a single point 144 on the vertical centerline 145 of piston 40. Line 142 is a horizontal line drawn through the maximum diameter of piston 40 which is shown located at top dead center. The angles of lines 140 and 141 to line 142 are determined by the mximum angle of tilt which piston 40 experiences as it reciprocates in the cylinder 22. The piston-to-cylinder contact point 66 is at midpiston and a lubricating gap 146 is uniform around piston 40.

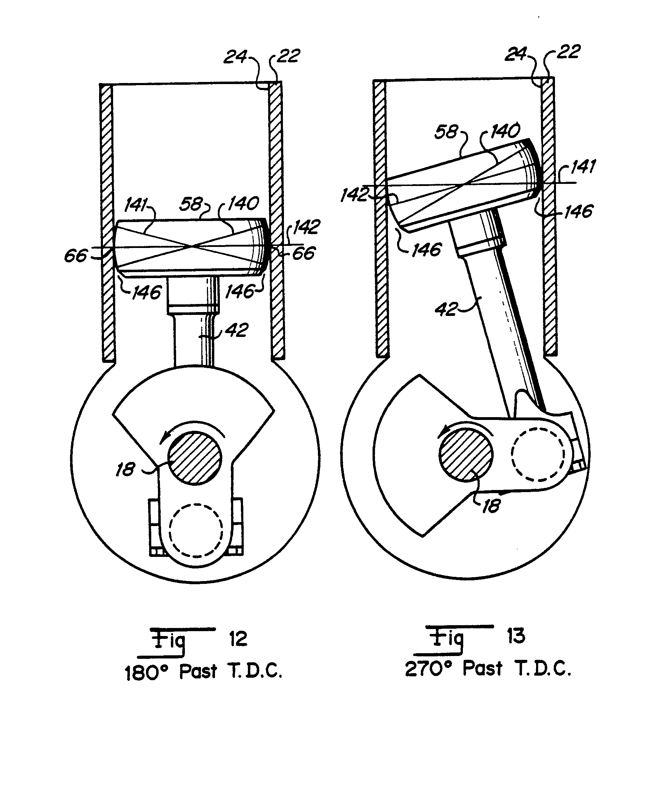

In Fig. 11, crankshaft 18 has rotated 90 degrees, and line 140 is now horizontal. The piston-to-cylinder contact point is at extremes of piston 40, along line 140. Lubricating gap 146 has closed down on one side of piston 40 and opened on the other.

In Fig. 12, crankshaft 18 has rotated a total of 180 degrees and piston 40 is at lower dead center. Here line 142 is horizontal. The piston-to-cylinder contact point 66 is along line 142 at midpiston and lubricating gap 146 is uniform around piston 40.

In Fig. 13, crankshaft 18 has rotated a total of 270 degrees and piston 40 is tilted the other way on its travel up cylinder 22. Here line 141 is horizontal. The piston-to-cylinder contact point is at opposite extremes of piston 40 and along line 141. Lubricating gap 146 has now closed on the side which was shown in Fig. 11, and opened on the side that was closed.

As will be apparent the "X-shaped" pattern described by lines 140 and 141 delineate the sliding wear surface of piston 40 in cylinder 22. Piston 40 thus is made with a side wall 60 which has a longer arc than that subtended by the intersecting lines 140 and 141. The inner ceiling 90 begins above the arc subtended by the "X-shaped" pattern 140, 141 and the oil-directing bevel 62 begins below the arc subtended by the "X-shaped" pattern 140, 141.

Referring again to Fig. 2 the piston 40 and connecting rod 42 are shown rigidly attached to each other for operation in the cylinder(s) 22 of an internal combustion engine. The upper outer wall 58 faces the expanding gases in the cylinder and the side walls 60 contact the cylinder wall 24 to seal the expanding gases above piston 40. The piston 40 tilts as it travels down the cylinder 22 because the lower end of connecting rod 42 travels in a circle since it is clamped to crank pin 16 on crankshaft 18. During this tilting, piston 40 never loses contact with the cylinder walls 24 because the outer side walls 60 are spherically contoured and the piston-to-cylinder wall contact point 66 varies along the side wall 60 as the piston tilts. In this way piston 40 essentially forms its own solid 360 degree oil ring.

The side walls 60 are thin enough to allow slight deformation as the piston expands due to the heat from the expanding gases above piston 40. The side walls 60 are thin for two other reasons:

(1) they can be cooled faster by the lubricating oil splashing up from below, and (2) a thin wall expands less than a thick wall. Thus the difference in the diameters of piston 40 between its hot and its cold conditions is small and close tolerances can be maintained.

Lubricating oil must be kept on cylinder wall 24 to minimize friction between cylinder wall 24 and piston side walls 60. To accomplish this, an oil-directing bevel 62 is incorporated into piston 40. This bevelled section of the lower edge of piston 40 directs oil, which is being thrown up from the crankcase, to cylinder wall 24 and the lower portion of the outer side walls 60.

The differences in construction and opertion of piston 40 and connecting rod 42 according to the presnt invention, and the standard piston 2 as shown in Fig. 1 can now be appreciated. Standard piston 2 does not tilt in its cylinder 22. It has three separate rings 28, 30, 32 with gaps 34 to maintain the seal between cylinder wall 24 and piston 2 and to wipe oil off of cylinder wall 24 as the piston 2 travels downward. In contrast, the main body of piston 40 of the invention forms its own 360-degree solid piston ring. Also, standard piston 2 has a long piston skirt 38 and a wrist pin 6 connecting it to connecting rod 4 and requires a long skirt to guide it in its cylinder. It is therefore heavier and requires a longer cylinder 22 to operate. Since piston 40 is lighter than standard piston 2, its counter weight 56 can be made smaller and lighter than the counterweight 20 for standard pistons.

Fig. 7 shows fins 160 rigidly attached to the stem 70 and radiating outwardly. These fins serve to cool the upper wall 58 and reduce flexure and expansion, and add support and rigidity between the stem 70 and the upper inner wall 90.

Fig. 8 shows piston 40 with concentric fins 170 on the upper inner wall 90. These fins may be included to permit slight flexing of the upper inner wall 90 and serve as heat exchangers to pass the heat in piston 40 to the lubricating oil in the engine.

Fig. 9 shows piston 40 with an extra thickness of material 180 along the inside bottom edge of piston side wall 60. This extra thickness of material serves to strengthen piston side wall 60 against severe deformation.

In Figs. 10, 11, 12, 13 the "X-shaped" pattern described by lines 140 and 141 delineate the sliding wear surface of piston 40 in cylinder 22. The piston's inner upper wall 90 begins above the arc subtended by "X-shaped pattern 140, 141 and oil-directing bevel 62 begins below the arc subtended by "X-shaped" pattern 140 and 141. If bevel 62 were any higher than the lower portion of this boundary, the seal formed between cylinder wall 24 and piston 40 would be disturbed. If it were any lower, piston 40 would then be longer and heavier than necessary. This bevel 62 also increases the available passageway 146 between the piston side wall 60 and cylinder wall 24 through which lubricating oil must pass. When piston 40 is at its maximum tilt, the piston-wall-to-cylinder-wall oil passageway 146 is closed on the high side of piston 40. Without bevel 62, little oil would reach that critical area. Bevel 62 provides a ramp on which the oil rides onto cylinder wall 24. Therefore, the piston-connecting rod assembly of the present invention is lighter, smoother running, more powerful for the same stroke and bore, better sealing, less expensive and easier to manufacture than standard piston assemblies.

While the above description contains many details, there should not be construed as limitations on the scope of the invention, but rather as an exemplification of one preferred embodiment thereof. Many other variations are possible. For example, the outer upper wall of the piston may vary in contour to coincide with the internal shape and valving of the cylinder in which it operates and the upper wall may vary in thickness to enhance or retard deformation or heat expansion to fit the cylinder in which it operates and the connecting rod may be rigidly attached to the piston via a keyed shaft instead of a screw fitting.

## Claims

1. Variable volume apparatus including a body (22) having a cylindrical bore (24), an eccentric crank (18) supported on said body for rotation about an axis that is normal to the cylindrical bore, and a piston (40) disposed within the cylindrical bore (24) for reciprocating, sliding motion therein in response to rotation of said crank, said piston having a substantially frusto-spherical shape (60) with maximum diameter substantially equal to the diameter of the cylindrical bore (24) and upper and lower truncation diameters less than said maximum diameter that are disposed at selected distances from the plane (106) of maximum diameter for maintaining a substantially continuous normal plane of contact with the cylindrical bore (24) during reciprocatingly sliding and tilting motion therein of the piston, and a connecting rod (42) rigidly attached to the piston (40) and rotatably attached to the eccentric crank (18) for reciprocatingly sliding and tilting the piston within the cylindrical bore in response to rotation of the crank, characterized in that the piston (40) includes a solid upper truncation (58) and a hollow interior that is open to the lower truncation to form a skirt (62) of the piston which has an arcuate outer surface, and in that a plurality of web members (160) are disposed within the hollow interior of the piston (40) on the solid upper truncation (58) thereof and radiate outwardly from the substantially central location (70) of rigid connection of the piston (40) and the connecting rod (42) toward the piston skirt (62).

2. Apparatus according to claim 1, characterized in that the piston includes a bevelled surface (62) near the lower edge of the skirt which tapers inwardly with distance away from the upper truncation (58).

3. Apparatus according to one of claims 1 or 2, characterized in that the piston (40) is threadedly attached to the connecting rod (42).

4. Apparatus according to claim 3, characterized in that the threaded attachment includes mating bevelled shoulders (80 and 72) on the connecting rod (42) and piston (40).

## Patentansprüche

1. Vorrichtung mit variablem Volumen mit einem Körper (22) mit zylindrischer Bohrung (24), einer den Körper unterstützenden exzentrischen Welle (18) zur Drehung um eine normal zur zylindrischen Bohrung verlaufenden Achse und einem Kolben (40) in der zylindrischen Bohrung (24) zum Ausführen einer hin- und hergehenden Gleitbewegung entsprechend der Drehung der Kurbelwelle, wobei der Kolben eine im wesentlichen abgeplattete Kugelgestalt (60) mit einem maximalen Durchmesser, der im wesentlichen gleich dem Durchmesser der zylindrischen Bohrung (24) ist, sowie obere und untere Abplattungsdurchmesser aufweist, die kleiner als der maximale Durchmesser sind und gewählte Abstände von der Ebene (106) des maximalen Durchmessers haben, um eine im wesentlichen Kontinuierliche normale Führungsebene mit der zylindrischen Bohrung (24) während der hin- und hergehenden Gleit- und Schwenkbewegung des Kolbens darin aufrecht zu erhalten, sowie einer Verbindungsstange (42), welche starr mit dem Kolben und drehbar mit einer exzentrischen Welle (18) verbunden ist, um den Kolben bei Drehung der exzentrischen Welle in der zylindrischen Bohrung hin- und hergleiten und schwenken zu lassen, dadurch gekennzeichnet, daß der Kolben (40) eine feste obere Wand (58) und ein hohles, zur unteren Abplattung hin offenes Inneres zur Bildung eines Hemdes (62) des Kolbens mit gewölbter Außenfläche aufweist und daß mehrere Stege (160) im hohlen Inneren des Kolbens (40) an der festen oberen Wand (58) angeordnet sind und von einem mittleren Gebiet (70) der starren Verbindung zwischen Kolben (40) und Verbindungsstange (42) zum Kolbenhemd (62) hin radial wegragen.

2. Vorrichtung nach Anspruch 1, dadurch gekennzeichnet, daß der Kolben nahe der Unterkante des Hemdes eines abgeschrägte kegelstumpfförmige Fläche (62) aufweist, welche sich mit zunehmendem Abstand von der oberen Wand (58) nach innen hin verjüngt.

3. Vorrichtung nach Anspruch 1 oder 2, dadurch gekennzeichnet, daß der Kolben (40) mit der Verbindungsstange (42) verschraubt ist.

4. Vorrichtung nach Anspruch 3, dadurch gekennzeichnet, daß die Schraubverbindung miteinander zusammenwirkende Schrägschultern (80 und 72) an der Verbindungsstange (42) und dem Kolben (40) aufweist.

## Revendications

1. Un appareil à volume variable comprenant un corps (22) comportant un alésage cylindrique (23), une manivelle excentrique (18) supportée sur ledit corps en vue de sa rotation autour d'un axe qui est normal à l'alésage cylindrique, et un piston (40) disposé à l'intérieur de l'alésage cylindrique (24) en vue d'un mouvement coulissant, en va-et-vient, dans ce dernier en réponse à la rotation de ladite manivelle, ledit piston présentant une forme (80) sensiblement en tronc de sphère avec un diamètre maximal sensiblement égal au diamètre de l'alésage cylindrique (24) et des diamètres supérieur et inférieur de troncature, inférieure audit diamètre maximal, qui sont disposés à des distances choisies du plan (106) de diamètre maximal pour maintenir un plan normal sensiblement continu de contact avec l'alésage cylindrique (24) pendant le mouvement de coulissement et de bascule en va-et-vient du piston à l'intérieur de celui-ci, et une bielle (42) attachée de façon rigide au piston (40) et attachée à rotation à la manivelle excentrique (18) pour amener le coulissement et le basculement en va-et-vient du piston à l'intérieur de l'alésage cylindrique en réponse à la rotation de la manivelle, caractérisé en ce que le piston (40) comprend une troncature supérieure pleine (58) et un intérieur creux qui est ouvert à la troncature inférieure pour former une jupe (62) du piston qui présente une surface extérieure incurvée, et en ce que de multiples organes (180) formant nervures sont placés à l'intérieur creux du piston (40) sur la troncature supérieure pleine (58) de celui-ci et rayonnent vers l'extérieur à partir de l'emplacement sensiblement central (70) de liaison rigide du piston (40) et de la bielle (42) vers la jupe (62) du piston.

2. Appareil selon la revendication 1, caractérisé en ce que le piston comprend, au voisinage du bord inférieur de la jupe, une surface chanfreinée (62) qui est inclinée vers l'intérieur à une certaine distance de la troncature supérieure (58).

3. Appareil selon l'une des revendications 1 et 2, caractérisé en ce que le piston (40) est attaché par filetage dans la bielle (42).

4. Appareil selon la revendication 3, caractérisé en ce que l'assemblage fileté comprend des épaulements chanfreinés appariés (80 et 72) sur la bielle (42) et le piston (40).

Fig 1

(PRIOR ART)

Fig 2

Fig 4

Fig 3

3

Fig 5

Fig 6

4

58

160

40

90

62

70

87

Fig 7

40

170

170

90

70

Fig 8

60

40

180

Fig 9

5

Fig 10
Top Dead Center
(T. D. C.)

Fig 11
90° Past T.D.C.

Fig 12
180° Past T.D.C.

Fig 13
270° Past T.D.C.